# EUROPÄISCHE PATENTSCHRIFT

(11) **EP 4 143 045 B1**
(45) Veröffentlichungstag und Bekanntmachung des Hinweises auf die Patenterteilung: **14.02.2024**
(21) Anmeldenummer: 21725710.4
(22) Anmeldetag: 29.04.2021
(51) Int. Cl.: B60K 6/48, B60W 10/02, B60W 10/06, B60W 10/08, B60W 30/186, B60W 30/18

(54) **VERFAHREN ZUM BETRIEB EINES KRAFTFAHRZEUG ANTRIEBSSTRANGES, SOWIE ELEKTRONISCHE STEUEREINHEIT ZUR DURCHFÜHRUNG DES VERFAHRENS**
METHOD FOR OPERATING A MOTOR VEHICLE DRIVE TRAIN AND ELECTRONIC CONTROL UNIT FOR CARRYING OUT SAID METHOD
PROCÉDÉ DE FONCTIONNEMENT D'UNE CHAÎNE CINÉMATIQUE DE VÉHICULE AUTOMOBILE ET UNITÉ DE COMMANDE ÉLECTRONIQUE POUR LA MISE EN OEUVRE DUDIT PROCÉDÉ

(30) Priorität: 29.04.2020 DE 102020205395
(43) Veröffentlichungstag der Anmeldung: 08.03.2023
(73) Patentinhaber: ZF Friedrichshafen AG, 88046 Friedrichshafen (DE); Bayerische Motoren Werke AG (BMW), 80809 München (DE)
(72) Erfinder: NEUBAUR, Roland, 86946 Vilgertshofen (DE); HANNEMANN, Florian, 80935 München (DE); PFISTERER, Markus, 82178 Puchheim (DE); FICKLER, Wolfgang, 80995 München (DE)
(74) Vertreter: ZF Friedrichshafen AG
(86) Internationale Anmeldenummer: PCT/EP2021/061214
(87) Internationale Veröffentlichungsnummer: WO 2021/219766

(56) Entgegenhaltungen:
- EP-A2- 2 065 243
- DE-A1-102010 028 025
- US-A1- 2007 272 456
- US-A1- 2009 143 950

## Beschreibung

Die Erfindung betrifft ein Verfahren zum Betrieb eines Kraftfahrzeug-Antriebsstrangs, insbesondere für ein Kraftfahrzeug mit Hybridantrieb. Die Erfindung betrifft ferner eine elektronische Steuereinheit zur Durchführung eines derartigen Verfahrens.

Die Patentanmeldung US 2009/0143950 A1 beschreibt eine Kontrollvorrichtung für ein Hybridfahrzeug mit einem Verbrennungsmotor, einem Elektromotor, einer ersten Kupplung zwischen Verbrennungsmotor und Elektromotor und einer zweiten Kupplung zwischen Elektromotor und Antriebsrädern. Ein Lastdetektor ermittelt die Last des Hybridfahrzeugs. Wenn die ermittelte Last einen vorherbestimmten Wert überschreitet, wird durch ein Steuergerät ein Elektromotor-Schlupf-Modus gewählt. In diesem Modus ist die erste Kupplung geöffnet, und die zweite Kupplung wird in einem Schlupfzustand betrieben. Der Verbrennungsmotor wird mit einer vorherbestimmten ersten Drehzahl betrieben, und der Elektromotor wird mit einer zweiten Drehzahl betrieben, welche geringer ist als die erste Drehzahl.

Die Patentanmeldung EP 2 065 244 A2 lehrt ein Verfahren zum Betrieb eines Hybridfahrzeugs, welches einen Verbrennungsmotor und einen Elektromotor zum Fahrzeugantrieb verwendet. Zwischen Verbrennungsmotor und Elektromotor ist eine Kupplung angeordnet. Eine zweite Kupplung ist zwischen dem Elektromotor und Antriebsrädern des Kraftfahrzeugs angeordnet. Ferner ist eine Temperaturermittlung vorgesehen, um die Temperatur der zweiten Kupplung zu erfassen. Abhängig von der Temperatur der zweiten Kupplung wird zwischen zwei verschiedenen Betriebsmodi ausgewählt. In einem ersten der Betriebsmodi wird die erste Kupplung geschlossen und die zweite Kupplung schlupfend betrieben, wobei der Verbrennungsmotor auf einer ersten Drehzahl betrieben wird. Im einem zweiten der Betriebsmodi wird die erste Kupplung geöffnet, die zweite Kupplung schlupfend betrieben, und der Elektromotor auf einer zweiten Drehzahl betrieben welche kleiner ist als die erste Drehzahl. Durch ein solches Verfahren soll ein Überhitzen der zweiten Kupplung vermieden werden, in dem die Differenzdrehzahl an der zweiten Kupplung temperaturabhängig reduziert wird.

Ein derartiger Moduswechsel abhängig von der Temperatur der zweiten Kupplung kann allerdings nicht mit hoher Dynamik durchgeführt werden, ohne den Fahrkomfort zu beeinträchtigen. Dadurch bietet das Verfahren keinen zuverlässigen Schutz vor einer Überhitzung der Kupplung, da die Temperatur einer Kupplung im Schlupfbetrieb sehr schnell steigen kann.

Es ist daher Aufgabe der Erfindung ein Verfahren bereitzustellen, mittels dem ein zuverlässiger Überlastungsschutz einer solchen Kupplung erzielt werden kann. Eine weitere Aufgabe der Erfindung ist es, ein dazu geeignetes Steuergerät bereitzustellen.

Die erste Aufgabe wird gelöst durch die Merkmale des Patentanspruchs 1. Die weitere Aufgabe wird gelöst durch die Merkmale des Patentanspruchs 12. Vorteilhafte Ausgestaltungen ergeben sich aus den abhängigen Patentansprüchen, der Beschreibung sowie aus den Figuren.

Es wird ein Verfahren zum Betrieb eines Kraftfahrzeug-Antriebsstrangs vorgeschlagen, welcher einen Verbrennungsmotor, eine elektrische Maschine sowie ein Getriebe aufweist. Das Getriebe ist zur Bereitstellung unterschiedlicher Gänge zwischen einer Antriebswelle und einer Abtriebswelle des Getriebes eingerichtet. Ein Rotor der elektrischen Maschine ist mit der Antriebswelle des Getriebes gekoppelt. Diese Kopplung kann unmittelbar erfolgen, sodass die Rotordrehzahl der Antriebswellendrehzahl entspricht. Rotor und Antriebswelle können alternativ dazu über ein Übersetzungsgetriebe miteinander verbunden sein.

Im Kraftfluss zwischen der elektrischen Maschine und der Abtriebswelle ist ein Anfahrelement angeordnet. Das Anfahrelement kann beispielsweise als hydraulischer Drehmomentwandler mit parallel geschalteter Überbrückungskupplung aufgebaut sein. Alternativ dazu kann eine separate Reibungskupplung das Anfahrelement bilden. Gemäß einer weiteren Alternative kann das Anfahrelement durch ein gangbildendes Schaltelement des Getriebes gebildet werden, sofern dieses Schaltelement als Reibungskupplung oder als Reibungsbremse ausgebildet ist. Das Anfahrelement erlaubt eine Drehmomentübertragung zwischen zumindest einer der Antriebsquellen des Antriebsstrangs und der Abtriebswelle, unter Ausbildung einer Differenzdrehzahl. Im Kraftfluss zwischen dem Verbrennungsmotor und der elektrischen Maschine ist eine Trennkupplung angeordnet, welche als Reibungskupplung ausgebildet ist.

Zu Beginn eines elektrischen Anfahrvorgangs wird das Kraftfahrzeug allein durch die elektrische Maschine angetrieben. Die Trennkupplung ist dabei geöffnet. Das Anfahrelement kann geschlossen sein, sodass am Anfahrelement keine Differenzdrehzahl besteht. In einem solchen Zustand ist die Drehzahl der elektrischen Maschine direkt vom im Getriebe eingelegten Gang und von der Drehzahl der Abtriebswelle abhängig. Alternativ dazu kann das Anfahrelement in einem Schlupfzustand betrieben werden.

Während des elektrischen Anfahrvorgangs wird der Verbrennungsmotor durch Schließen der Trennkupplung mit Hilfe der elektrischen Maschine angeschleppt. Bei ausreichender Drehzahl des Verbrennungsmotors kann dieser den Betrieb aufnehmen und eigenständig aufrechterhalten. Die Trennkupplung wird anschließend wieder geöffnet.

Erfindungsgemäß ist nun vorgesehen, dass nach dem Anschleppen des Verbrennungsmotors das Kraftfahrzeug weiterhin alleine durch die elektrische Maschine angetrieben wird. Dabei ist die abtriebsseitige Drehzahl der Trennkupplung kleiner als eine Leerlaufdrehzahl des Verbrennungsmotors. Die Trennkupplung wird zum Unterstützen des Kraftfahrzeug-Antriebs durch den Verbrennungsmotor erst dann geschlossen, wenn ein Soll-Antriebsmoment des Kraftfahrzeugs einen Grenzwert erreicht oder überschreitet.

Durch ein solches Verfahren kann der Energieeintrag in das Anfahrelement geringgehalten werden, da die abtriebsseitige Drehzahl der Trennkupplung nach dem Anschleppen des Verbrennungsmotors kleiner ist als die Verbrennungsmotor-Leerlaufdrehzahl. Somit kann ein Überhitzen des Anfahrelements vermieden werden. Steigt das erforderliche Antriebsmoment über den Grenzwert hinaus an, so kann der bereits laufende Verbrennungsmotor mit hoher Dynamik an den Antriebsstrang gekoppelt werden.

Vorzugsweise bleibt die abtriebsseitige Drehzahl der Trennkupplung nach dem Anschleppen des Verbrennungsmotors zumindest solange kleiner als die Leerlaufdrehzahl des Verbrennungsmotors, bis das Soll-Antriebsmoment den Grenzwert erreicht oder überschreitet. Dadurch kann der Energieeintrag in das Anfahrelement weiter geringgehalten werden.

Vorzugsweise wird das Anfahrelement während des Anschleppens des Verbrennungsmotors in einem Schlupfzustand betrieben, wobei der Schlupf am Anfahrelement nach Öffnen der Trennkupplung wieder reduziert wird, insbesondere auf Null. Dadurch können Drehschwingungen, die beim Anschleppen des Verbrennungsmotors entstehen, von der Abtriebswelle entkoppelt werden. Der rasche Aufbau des Anfahrelement-Schlupfs kann durch entsprechende Steuerung der elektrischen Maschine beschleunigt werden.

Gemäß einer bevorzugten Ausgestaltung wird der Schlupf am Anfahrelement vergrößert, wenn das Soll-Antriebsmoment den Grenzwert erreicht oder überschreitet. Damit wird eine Differenzdrehzahl an der Trennkupplung beim Schließen derselben minimiert, sodass die Trennkupplung thermisch möglichst wenig belastet wird. Der rasche Aufbau des Anfahrelement-Schlupfs kann durch entsprechende Steuerung der elektrischen Maschine beschleunigt werden.

Gemäß einer alternativen Ausgestaltung bleibt der Schlupf am Anfahrelement unverändert, wenn das Soll-Antriebsmoment des Kraftfahrzeugs den Grenzwert erreicht oder überschreitet, sodass die Trennkupplung während eines Schlupfbetriebs derselben geschlossen wird. Gemäß einer weiteren alternativen Ausgestaltung wird sowohl das Anfahrelement als auch die Trennkupplung in einem Schlupfbetrieb betrieben, wenn das Soll-Antriebsmoment des Kraftfahrzeugs den Grenzwert erreicht oder überschreitet.

Welche der drei vorgenannten Verfahrensabläufe zum Einsatz kommt hängt von der thermischen Belastbarkeit des Anfahrelements und der Trennkupplung ab. Zusätzlich kann eine Abhängigkeit von dem Betrag des angeforderten Soll-Antriebsmoments bestehen.

Vorzugsweise wird der Verbrennungsmotor nach dem Anschleppen aktiv betrieben ohne zum Antrieb des Kraftfahrzeugs beizutragen. Der Verbrennungsmotor wird demnach erst dann an den Antriebsstrang gekoppelt, wenn das Soll-Antriebsmoment den Grenzwert erreicht oder überschreitet. Dabei wird der Verbrennungsmotor vorzugsweise drehzahlgeregelt betrieben, wobei eine Soll-Drehzahl des Verbrennungsmotors abhängig vom vorliegenden Soll-Antriebsmoment ist. Dadurch kann einem Fahrer des Kraftfahrzeugs eine akustische Rückmeldung zum angeforderten Soll-Antriebsmoment gegeben werden, auch wenn der Verbrennungsmotor nicht zum Antrieb des Kraftfahrzeugs beiträgt.

Zur Lösung der Aufgabe wird außerdem eine elektronische Steuereinheit vorgeschlagen, welche dazu eingerichtet ist, das eingangs beschriebene Verfahren durchzuführen. Die elektronische Steuereinheit kann zur Durchführung weiterer Funktionen der Antriebsstrangsteuerung vorgesehen sein.

Ausführungsbeispiele der Erfindung sind nachfolgend detailliert beschrieben. Es zeigen:
Fig. 1 bis Fig. 3 je einen Antriebsstrang eines Kraftfahrzeugs; sowie
Fig. 4 bis Fig. 6 je einen zeitlichen Ablauf verschiedener Größen des Antriebsstrangs.

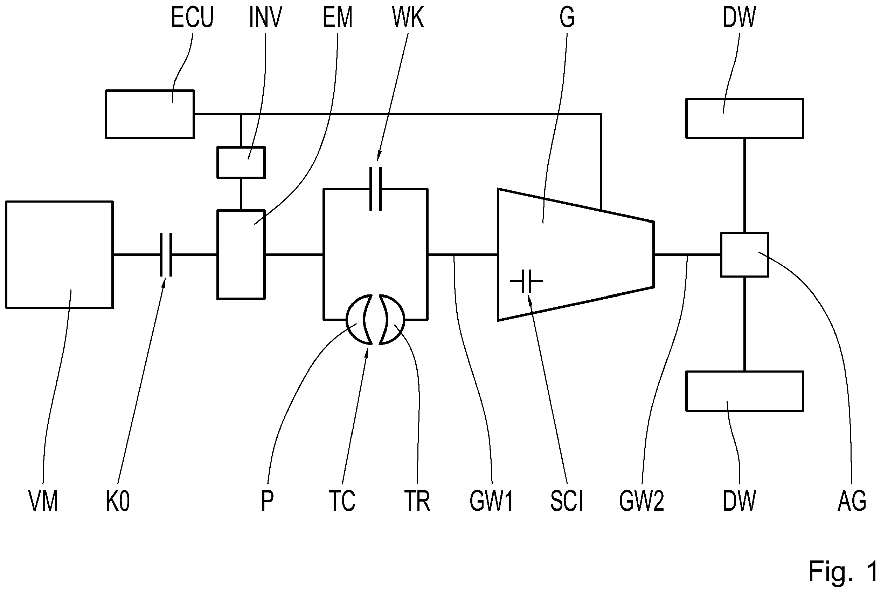

Fig. 1 zeigt eine schematische Darstellung eines Hybridantriebsstrangs für ein Kraftfahrzeug. Der Hybridantriebsstrang weist einen Verbrennungsmotor VM und eine elektrische Maschine EM auf. Zwischen dem Verbrennungsmotor VM und der elektrischen Maschine EM ist eine Trennkupplung K0 angeordnet. Mittels der Trennkupplung K0 ist ein Kraftfluss zwischen dem Verbrennungsmotor VM und der elektrischen Maschine EM schaltbar. Der Hybridantriebsstrang umfasst ferner ein Getriebe G mit einer Antriebswelle GW1 und einer Abtriebswelle GW2. Die Abtriebswelle GW2 ist mit einem Differentialgetriebe AG verbunden, über welches die an der Abtriebswelle GW2 anliegende Leistung auf Antriebsräder DW des Kraftfahrzeugs verteilt wird. Im Kraftfluss zwischen der elektrischen Maschine EM und der Antriebswelle GW1 ist ein Drehmomentwandler TC angeordnet. Der Drehmomentwandler TC umfasst ein Pumpenrad P, welches mit der elektrischen Maschine EM verbunden ist. Ein Turbinenrad TR des Drehmomentwandlers TC ist mit der Antriebswelle GW1 verbunden. Pumpenrad P und Turbinenrad TR wirken hydrodynamisch zusammen, sodass Leistung vom Pumpenrad P hydrodynamisch auf das Turbinenrad TR übertragen werden kann. Pumpenrad P und Turbinenrad TR sind durch Schließen einer Überbrückungskupplung WK mechanisch miteinander verbindbar.

Das Getriebe G ist zur Darstellung von verschiedenen Gängen zwischen der Antriebswelle GW1 und der Abtriebswelle GW2 eingerichtet. Zur Bildung der Gänge sind mehrere Schaltelemente vorgesehen. Eines davon ist in Fig. 1 beispielhaft dargestellt, und ist darin als SCI bezeichnet. Die Schaltelemente, inkl. dem Schaltelement SCI wirken mit in Fig. 1 nicht dargestellten Planetenradsätzen zusammen, um die verschiedenen Gänge zwischen Antriebswelle GW1 und Abtriebswelle GW2 zu bilden. Dies ist nur beispielhaft anzusehen. Anstelle oder ergänzend zu den Planetenradsätzen können Stirnradstufen und/oder ein oder mehrere Reibradgetriebe verwendet werden, welche mit den Schaltelementen, inkl. dem Schaltelement SCI zur Gangbildung zusammenwirken.

Ferner ist eine elektronische Steuereinheit ECU vorgesehen. Die Steuereinheit ECU steht mit einem Umrichter INV in Kommunikationsverbindung, welcher der elektrischen Maschine EM zu deren Steuerung zugeordnet ist. Die Steuereinheit ECU steht ferner mit dem Getriebe G in Kommunikationsverbindung. Das Getriebe G umfasst einen Aktuator zur Betätigung des Schaltelements SCI. Ferner umfasst das Getriebe G auch einen Aktuator zur Betätigung der Überbrückungskupplung WK und einen Aktuator zur Betätigung der Trennkupplung K0. Auch dies ist lediglich beispielhaft anzusehen. Die Trennkupplung K0 könnte auch von einem Aktuator betätigt werden, welcher unabhängig vom Getriebe G ist. Gleiches gilt für die Betätigung der Überbrückungskupplung WK.

Die Überbrückungskupplung WK bildet ein drehmomentübertragendes Element zwischen der elektrischen Maschine EM und der Abtriebswelle GW2. Wird die Überbrückungskupplung im Schlupf betrieben, so kann ein Drehmoment vom Verbrennungsmotor VM und/oder von der elektrischen Maschine EM an die Antriebsräder DW übertragen werden, ohne dass eine feste Drehzahlbeziehung zwischen Abtriebswelle GW2 und elektrischer Maschine EM besteht. Die Überbrückungskupplung WK kann somit als Anfahrelement wirken.

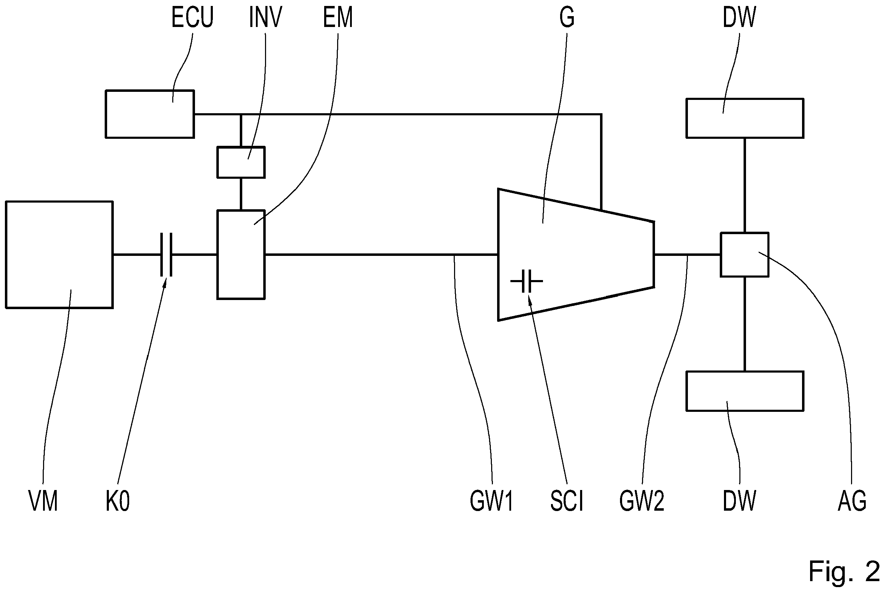

Fig. 2 zeigt eine schematische Darstellung eines weiteren Hybridantriebsstrangs für ein Kraftfahrzeug, welcher im Wesentlichen dem in Fig. 1 dargestellten Antriebsstrang entspricht. Der Drehmomentwandler entfällt nun, sodass die elektrische Maschine EM direkt mit der Antriebswelle GW1 verbunden ist. Ist das Schaltelement SCI an der Gangbildung im Getriebe G beteiligt, so bildet das Schaltelement SCI ein drehmomentübertragendes Element zwischen der elektrischen Maschine EM und der Abtriebswelle GW2. Wird das Schaltelement SCI im Schlupf betrieben, so kann ein Drehmoment vom Verbrennungsmotor VM und/oder von der elektrischen Maschine EM an die Antriebsräder DW übertragen werden, ohne dass eine feste Drehzahlbeziehung zwischen Abtriebswelle GW2 und Antriebswelle GW1 besteht. Das Schaltelement SCI kann somit als Anfahrelement wirken.

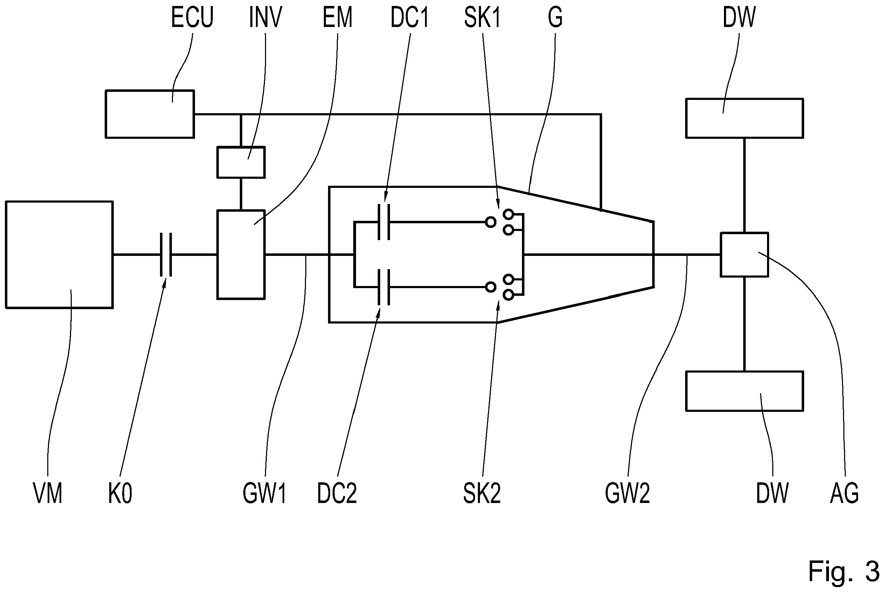

Fig. 3 zeigt eine schematische Darstellung eines weiteren Hybridantriebsstrangs für ein Kraftfahrzeug, welcher im Wesentlichen dem in Fig. 1 dargestellten Antriebsstrang entspricht. Der Drehmomentwandler entfällt nun, sodass die elektrische Maschine EM direkt mit der Antriebswelle GW1 verbunden ist. Das Getriebe G ist nun als Doppelkupplungsgetriebe aufgeführt, wobei die Doppelkupplung durch die Kupplungen DC1 und DC2 gebildet ist. Jeder der Kupplungen DC1, DC2 ist eine Schaltkupplungseinheit SK1, SK2 zugeordnet. Jede der Schaltkupplungseinheiten SK1, SK2 umfasst zumindest zwei formschlüssigen Kupplungen, welche über eine in Fig. 3 nicht dargestellte Synchronisiereinheit verfügen können. Abtriebsseitig sind die Schaltkupplungseinheiten SK1, SK2 mit der Abtriebswelle GW2 verbunden. Wird eine der Doppelkupplungen DC1, DC2 im Schlupf betrieben, so kann ein Drehmoment vom Verbrennungsmotor VM und/oder von der elektrischen Maschine EM an die Antriebsräder DW übertragen werden, ohne dass eine feste Drehzahlbeziehung zwischen Abtriebswelle GW2 und Antriebswelle GW1 besteht. Die Kupplungen DC1, DC2 können somit als Anfahrelement wirken.

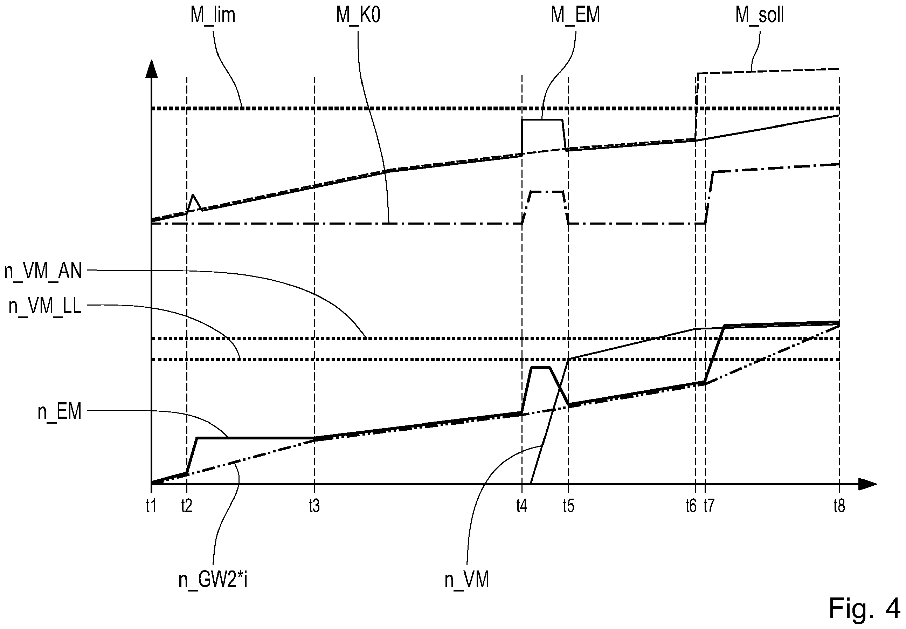

Fig. 4 zeigt den zeitlichen Verlauf verschiedener Größen eines der Antriebsstränge gemäß Fig. 1, Fig. 2 oder Fig. 3 während eines Anfahrvorgangs, darunter ein Soll-Antriebsmoment M_soll, ein Drehmoment M_EM der elektrischen Maschine EM, ein Grenzwert M_lim, ein von der Trennkupplung K0 übertragenes Drehmoment M_K0, eine Drehzahl n_EM der elektrischen Maschine EM, eine Drehzahl n_GW2*i der Abtriebswelle GW2 im Verhältnis zum vorliegenden Übersetzungsverhältnis des Getriebes G, eine Drehzahl n_VM des Verbrennungsmotors VM, eine Leerlaufdrehzahl n_VM_LL des Verbrennungsmotors VM sowie eine Anfahrdrehzahl n_VM_AN des Verbrennungsmotors VM.

Zu einem Zeitpunkt t1 beginnt ein Anfahrvorgang des Kraftfahrzeugs mit einem der Antriebsstränge gemäß Fig. 1, Fig. 2 oder Fig. 3. Bei diesem Anfahrvorgang wird das Fahrzeug allein durch die elektrische Maschine EM angetrieben, wobei die Trennkupplung K0 geöffnet ist und somit das Übertragungsmoment M_K0 der Trennkupplung gleich Null ist. Allfällige Schleppverluste der geöffneten Trennkupplung K0 werden in dieser schematischen Darstellung nicht berücksichtigt. Das Anfahrelement WK, SCI, DC1, DC2 ist vollständig geschlossen, sodass die Drehzahl n_GW2*i der Drehzahl n_EM der elektrischen Maschine EM entspricht. Das Drehmoment M_EM der elektrischen Maschine EM wird somit schlupffrei an den Abtrieb GW2 übertragen.

Zu einem Zeitpunkt t2 wird das Drehmoment M_EM der elektrischen Maschine EM kurzzeitig erhöht, sodass das Anfahrelement WK, SCI, DC1, DC2 einen Schlupfzustand einnimmt. Die elektrische Maschine EM wird nach Erreichen eines definierten Drehzahlwerts mit konstanter Drehzahl n_EM betrieben. Ein solches Vorgehen kann beispielsweise dazu erforderlich sein, um das Soll-Antriebsmoment M_soll im Getriebe G zu übertragen. Denn mit steigendem Soll-Antriebsmoment M_soll steigt auch die erforderliche Anpresskraft von hydraulisch betätigten Schaltelementen des Getriebes G, sodass eine von der Antriebswelle GW1 angetriebene Hydraulikpumpe mit entsprechender Drehzahl zu betreiben ist um den erforderlichen Druck und den erforderlichen Volumenstrom bereitzustellen.

Zu einem Zeitpunkt t3 erreicht die Drehzahl n_GW2*i den definierten Drehzahlwert der elektrischen Maschine EM. Bei nun weiter steigender Drehzahl n_GW2*i wird das Anfahrelement WK, SCI, DC1, DC2 geschlossen, um einen thermischen Energieeintrag in das Anfahrelement WK, SCI, DC1, DC2 zu vermeiden. Das Drehmoment M_EM der elektrischen Maschine EM wird somit schlupffrei an den Abtrieb GW2 übertragen.

Zu einem Zeitpunkt t4 wird durch eine Betriebsstrategie des Fahrzeugs ein Start des Verbrennungsmotors VM angefordert. Dazu wird die Trennkupplung K0 derart angesteuert, dass über die Trennkupplung K0 ein Drehmoment M_K0 zum Verbrennungsmotor VM übertragen wird. Das zum Anschleppen des Verbrennungsmotors VM erforderliche Drehmoment wird durch eine Erhöhung des Drehmoments M_EM der elektrischen Maschine EM bereitgestellt. Das Anfahrelement WK, SCI, DC1, DC2 wird dabei in einem Schlupfzustand betrieben, um die Abtriebswelle GW2 von Schwingungen des Verbrennungsmotorstarts zu entkoppeln. Die Trennkupplung K0 wird nach dem Anschleppvorgang wieder geöffnet, sodass das Kraftfahrzeug weiterhin alleine durch die elektrische Maschine EM angetrieben wird. Der Schlupfzustand am Anfahrelement WK, SCI, DC1, DC2 wird wieder abgebaut, sodass ab dem Zeitpunkt t5 das Anfahrelement WK, SCI, DC1, DC2 schlupffrei betrieben wird. Die Drehzahl n_EM der elektrischen Maschine EM ist dabei geringer als die Leerlaufdrehzahl n_VM_LL.

Ist der Verbrennungsmotor VM zum Zeitpunkt t5 gestartet und selbstständig betriebsfähig, so wird die Drehzahl VM_n des Verbrennungsmotors VM abhängig vom Soll-Antriebsmoment M_soll gewählt, sodass mit steigendem Soll-Antriebsmoment M_soll auch die Drehzahl VM_n des Verbrennungsmotors VM steigt. Dadurch wird dem Fahrer des Kraftfahrzeugs eine akustische Rückmeldung über das steigende Soll-Antriebsmoment M_soll vermittelt.

Zu einem Zeitpunkt t6 wird das Soll-Antriebsmoment M_soll deutlich erhöht, beispielsweise aufgrund einer entsprechenden Betätigung eines Fahrpedals des Kraftfahrzeugs. Das Soll-Antriebsmoment M_soll überschreitet dabei den Grenzwert M_lim. In Reaktion darauf wird das von der Trennkupplung K0 übertragene Drehmoment M_K0 ab dem Zeitpunkt t7 erhöht, sodass der Verbrennungsmotor VM zum Antrieb des Kraftfahrzeugs beitragen kann. Um die Differenzdrehzahl an der Trennkupplung K0 gering zu halten oder auf Null zu reduzieren wird die Drehzahl n_EM der elektrischen Maschine EM erhöht, sodass das Anfahrelement WK, SCI, DC1, DC2 in einen Schlupfzustand versetzt wird. Zu einem Zeitpunkt t8 erreicht die Drehzahl n_GW2*i die Drehzahl n_EM der elektrischen Maschine EM, woraufhin das Anfahrelement WK, SCI, DC1, DC2 wieder in einen geschlossenen Zustand überführt wird.

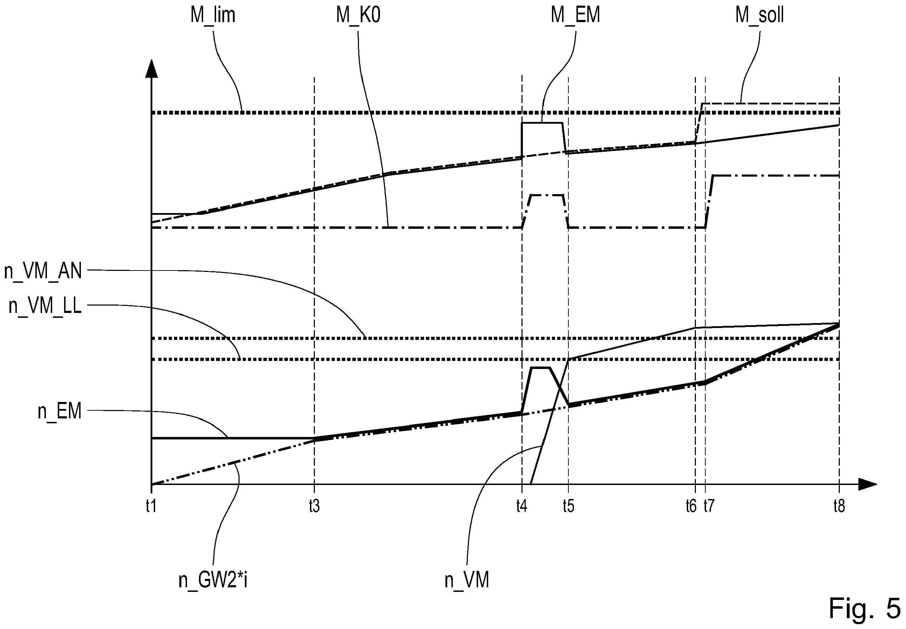

Fig. 5 zeigt einen weiteren zeitlichen Verlauf verschiedener Größen eines der Antriebsstränge gemäß Fig. 1, Fig. 2 oder Fig. 3 während eines Anfahrvorgangs. Die in Fig. 5 dargestellten Größen und der Ablauf entspricht weitgehend dem in Fig. 4 dargestellten Verlauf, sodass auf die Beschreibung zu Fig. 4 verwiesen wird.

Im Ablauf gemäß Fig. 5 ist die Drehzahl n_EM der elektrischen Maschine EM zum Zeitpunkt t1 im Unterschied zum Ablauf gemäß Fig. 4 bereits größer als Null, und nimmt einen konstanten Wert an. Mit steigendem Soll-Antriebsmoment M_soll wird das Anfahrelement WK, SCI, DC1, DC2 derart angesteuert, dass über das Anfahrelement WK, SCI, DC1, DC2 ein Drehmoment übertragen wird, sodass es zu einem Anstieg der Drehzahl n_GW2*i kommt - das Kraftfahrzeug beginnt zu fahren.

Im Ablauf gemäß Fig. 5 übersteigt das Soll-Antriebsmoment M_soll zum Zeitpunkt t6 den Grenzwert M_lim im Unterschied zum Ablauf gemäß Fig. 4 nur geringfügig. Aufgrund dieser nur geringfügigen Überschreitung bleibt das Anfahrelement WK, SCI, DC1, DC2 auch nach dem Zeitpunkt t7 geschlossen, sodass die Differenzdrehzahl an der Trennkupplung K0 erst bis zum Zeitpunkt t8 abgebaut wird.

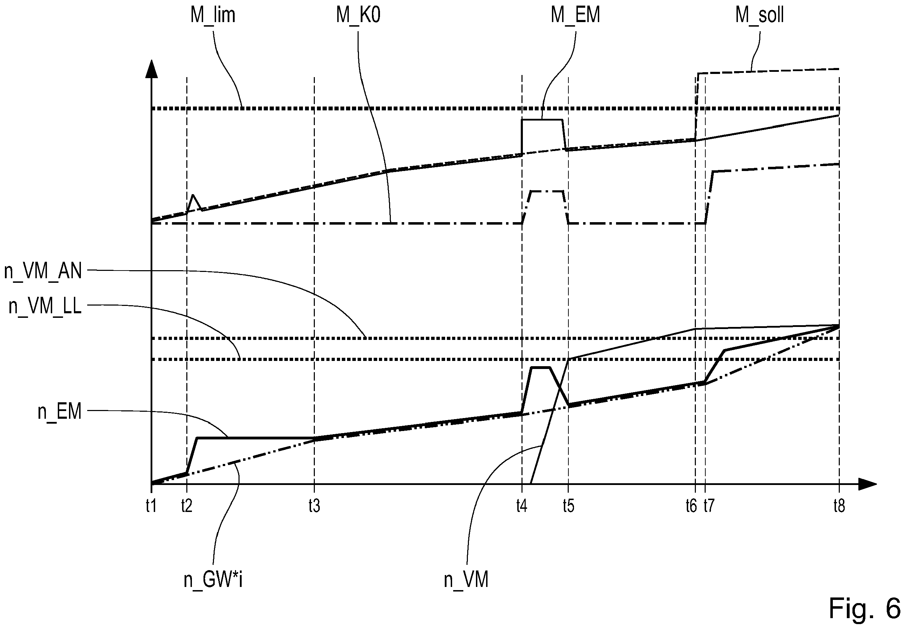

Fig. 6 zeigt einen weiteren zeitlichen Verlauf verschiedener Größen eines der Antriebsstränge gemäß Fig. 1, Fig. 2 oder Fig. 3 während eines Anfahrvorgangs. Die in Fig. 6 dargestellten Größen und der Ablauf entspricht weitgehend dem in Fig. 4 dargestellten Verlauf, sodass auf die Beschreibung zu Fig. 4 verwiesen wird.

Im Ablauf gemäß Fig. 6 wird die elektrische Maschine EM nach dem Zeitpunkt t7 im Unterschied zum Ablauf gemäß Fig. 4 so angesteuert, dass zwar ein Schlupfzustand am Anfahrelement WK, SCI, DC1, DC2 herbeigeführt wird, jedoch die Differenzdrehzahl an der Trennkupplung K0 nicht vollständig abgebaut wird. Vielmehr werden sowohl die Trennkupplung K0 als auch das Anfahrelement WK, SCI, DC1, DC2 im Schlupfzustand betrieben, sodass die thermische Belastung auf das Anfahrelement WK, SCI, DC1, DC2 und auf die Trennkupplung K0 aufgeteilt wird.

### Bezugszeichen

- VM: Verbrennungsmotor
- n_VM: Drehzahl des Verbrennungsmotors
- n_VM_LL: Leerlaufdrehzahl des Verbrennungsmotors
- n_VM_AN: Anfahrdrehzahl des Verbrennungsmotors
- G: Getriebe
- GW1: Antriebswelle
- GW2: Abtriebswelle
- n_GW2*i: Drehzahl der Abtriebswelle GW2 im Verhältnis zum Übersetzungsverhältnis des Getriebes
- K0: Trennkupplung
- M_K0: Übertragungsmoment der Trennkupplung
- EM: Elektrische Maschine
- n_EM: Drehzahl der elektrischen Maschine
- TC: Drehmomentwandler
- P: Pumpenrad
- TR: Turbinenrad
- WK: Überbrückungskupplung
- SCI: Schaltelement
- DC1, DC2: Kupplung
- SK1, SK2: Schaltkupplungseinheit
- M_soll: Soll-Antriebsmoment
- M_lim: Grenzwert
- AG: Differentialgetriebe
- DW: Antriebsrad
- ECU: Steuereinheit
- INV: Umrichter

## Patentansprüche

1. Verfahren zum Betrieb eines Antriebsstranges eines Kraftfahrzeugs, wobei der Antriebsstrang zumindest einen Verbrennungsmotor (VM), eine elektrische Maschine (EM), ein Getriebe (G) zur Bereitstellung unterschiedlicher Gänge zwischen einer Antriebswelle (GW1) und einer Abtriebswelle (GW2) des Getriebes (G), ein Anfahrelement (WK, SCI, DC1, DC2) im Kraftfluss zwischen der elektrischen Maschine (EM) und der Abtriebswelle (GW2) sowie eine Trennkupplung (K0) im Kraftfluss zwischen dem Verbrennungsmotor (VM) und der elektrischen Maschine (EM) aufweist, wobei ein Rotor (R) der elektrischen Maschine (EM) mit der Antriebswelle (GW1) gekoppelt ist,
- wobei zu Beginn eines elektrischen Anfahrvorgangs das Kraftfahrzeug allein durch die elektrische Maschine (EM) angetrieben wird, und dabei das Anfahrelement (WK, SCI, DC1, DC2) geschlossen ist oder in einem Schlupfzustand betrieben wird, und wobei die Trennkupplung (K0) geöffnet ist,
- wobei während des elektrischen Anfahrvorgangs der Verbrennungsmotor (VM) durch Schließen der Trennkupplung (K0) mit Hilfe der elektrischen Maschine (EM) angeschleppt wird, und anschließend die Trennkupplung (K0) wieder geöffnet wird,
**dadurch gekennzeichnet, dass** nach dem Anschleppen des Verbrennungsmotors (VM) das Kraftfahrzeug weiterhin alleine durch die elektrische Maschine (EM) angetrieben wird, wobei eine abtriebsseitige Drehzahl (n_EM) der Trennkupplung (K0) kleiner ist als eine Leerlaufdrehzahl (n_VM_LL) des Verbrennungsmotors (VM), und dass die Trennkupplung (K0) zum Unterstützen des Kraftfahrzeug-Antriebs durch den Verbrennungsmotor (VM) erst dann geschlossen wird, wenn ein Soll-Antriebsmoment (M_soll) des Kraftfahrzeugs einen Grenzwert (M_lim) erreicht oder überschreitet.

2. Verfahren nach Anspruch 1, **dadurch gekennzeichnet, dass** die abtriebsseitige Drehzahl (n_EM) der Trennkupplung (K0) nach dem Anschleppen des Verbrennungsmotors (VM) zumindest solange kleiner bleibt als die Leerlaufdrehzahl (n_VM_LL) des Verbrennungsmotors (VM), bis das Soll-Antriebsmoment (M_soll) des Kraftfahrzeugs den Grenzwert (M_lim) erreicht oder überschreitet.

3. Verfahren nach Anspruch 1 oder Anspruch 2, **dadurch gekennzeichnet, dass** das Anfahrelement (WK, SCI, DC1, DC2) während des Anschleppens des Verbrennungsmotors (VM) in einem Schlupfzustand betrieben wird, wobei der Schlupf am Anfahrelement (WK, SCI, DC1, DC2) nach Öffnen der Trennkupplung (K0) wieder reduziert wird.

4. Verfahren nach Anspruch 3, **dadurch gekennzeichnet, dass** der Schlupf am Anfahrelement (WK, SCI, DC1, DC2) nach Öffnen der Trennkupplung (K0) auf Null reduziert wird.

5. Verfahren nach einem der Ansprüche 1 bis 4, **dadurch gekennzeichnet, dass** der Schlupf am Anfahrelement (WK, SCI, DC1, DC2) vergrößert wird, wenn das Soll-Antriebsmoment (M_soll) des Kraftfahrzeugs den Grenzwert (M_lim) erreicht oder überschreitet, um eine Differenzdrehzahl an der Trennkupplung (K0) beim Schließen der Trennkupplung (K0) zu minimieren.

6. Verfahren nach einem der Ansprüche 1 bis 4, **dadurch gekennzeichnet, dass** der Schlupf am Anfahrelement (WK, SCI, DC1, DC2) unverändert bleibt, wenn das Soll-Antriebsmoment (M_soll) des Kraftfahrzeugs den Grenzwert (M_lim) erreicht oder überschreitet, sodass die Trennkupplung (K0) während eines Schlupfbetriebs der Trennkupplung (K0) geschlossen wird.

7. Verfahren nach einem der Ansprüche 1 bis 4, **dadurch gekennzeichnet, dass** sowohl das Anfahrelement (WK, SCI, DC1, DC2) als auch die Trennkupplung (K0) in einem Schlupfzustand betrieben werden, wenn das Soll-Antriebsmoment (M_soll) des Kraftfahrzeugs den Grenzwert (M_lim) erreicht oder überschreitet.

8. Verfahren gemäß den Ansprüchen 5 bis 7, **dadurch gekennzeichnet, dass** eine Auswahl, welches der Verfahren gemäß Anspruch 5, Anspruch 6 oder Anspruch 7 verwendet wird, abhängig von einem Betrag des vorliegenden Soll-Antriebsmoments (M_soll) ist.

9. Verfahren nach einem der Ansprüche 1 bis 8, **dadurch gekennzeichnet, dass** der Verbrennungsmotor (VM) nach dem Anschleppen aktiv betrieben wird ohne zum Antrieb des Kraftfahrzeugs beizutragen, und erst dann an den Antriebsstrang gekoppelt wird, wenn das Soll-Antriebsmoment (M_soll) des Kraftfahrzeugs den Grenzwert (M_lim) erreicht oder überschreitet.

10. Verfahren nach Anspruch 9, **dadurch gekennzeichnet, dass** der Verbrennungsmotor (VM) nach dem Anschleppen zumindest solange drehzahlgeregelt betrieben wird, bis der Verbrennungsmotor (VM) durch Schließen der Trennkupplung (K0) an den Antriebsstrang gekoppelt wird,

11. Verfahren nach Anspruch 10, **dadurch gekennzeichnet, dass** eine Soll-Drehzahl des Verbrennungsmotors (VM) im drehzahlgeregelten Betrieb abhängig vom vorliegenden Soll-Antriebsmoment (M_soll) ist.

12. Elektronische Steuereinheit (ECU) zur Steuerung und Regelung eines Kraftfahrzeug-Antriebsstrangs, **dadurch gekennzeichnet, dass** die Steuereinheit (ECU) zur Durchführung des Verfahrens gemäß einem der Ansprüche 1 bis 11 eingerichtet ist.

## Claims

1. Method for operating a drive train of a motor vehicle, wherein the drive train has at least one internal combustion engine (VM), an electric machine (EM), a transmission (G) for providing different gears between a drive shaft (GW1) and an output shaft (GW2) of the transmission (G), a starting element (WK, SCI, DC1, DC2) in the flow of power between the electric machine (EM) and the output shaft (GW2) and a separating clutch (K0) in the flow of power between the internal combustion engine (VM) and the electric machine (EM), wherein a rotor (R) of the electric machine (EM) is coupled to the drive shaft (GW1),
- wherein, at the beginning of an electric starting process, the motor vehicle is driven purely by the electric machine (EM) and in the process the starting element (WK, SCI, DC1, DC2) is engaged or is operated in a slipping state, and wherein the separating clutch (K0) is disengaged,
- wherein, during the electric starting process, the internal combustion engine (VM) is cranked by means of the electric machine (EM) by engaging the separating clutch (K0), and the separating clutch (K0) is then disengaged again,
**characterized in that**, after the internal combustion engine (VM) is cranked, the motor vehicle continues to be driven purely by the electric machine (EM), wherein an output-side speed (n_EM) of the separating clutch (K0) is lower than an idling speed (n_VM_LL) of the internal combustion engine (VM), and **in that** the separating clutch (K0) is only engaged by the internal combustion engine (VM) in order to support the motor vehicle drive when a target drive torque (M_soll) of the motor vehicle reaches or exceeds a limit value (M_lim).

2. Method according to Claim 1, **characterized in that** the output-side speed (n_EM) of the separating clutch (K0) remains lower than the idling speed (n_VM_LL) of the internal combustion engine (VM) after the cranking of the internal combustion engine (VM) at least until the target drive torque (M_soll) of the motor vehicle reaches or exceeds the limit value (M_lim).

3. Method according to Claim 1 or Claim 2, **characterized in that** the starting element (WK, SCI, DC1, DC2) is operated in a slip state during the cranking of the internal combustion engine (VM), wherein the slip at the starting element (WK, SCI, DC1, DC2) is reduced again after the separating clutch (K0) is disengaged.

4. Method according to Claim 3, **characterized in that** the slip at the starting element (WK, SCI, DC1, DC2) is reduced to zero after the separating clutch (K0) is disengaged.

5. Method according to one of Claims 1 to 4, **characterized in that** the slip at the starting element (WK, SCI, DC1, DC2) is increased when the target drive torque (M_soll) of the motor vehicle reaches or exceeds the limit value (M_lim) in order to minimize a differential speed at the separating clutch (K0) when the separating clutch (K0) is engaged.

6. Method according to one of Claims 1 to 4, **characterized in that** the slip at the starting element (WK, SCI, DC1, DC2) remains unchanged when the target drive torque (M_soll) of the motor vehicle reaches or exceeds the limit value (M_lim) so that the separating clutch (K0) is engaged during a slip operation of the separating clutch (K0).

7. Method according to one of Claims 1 to 4, **characterized in that** both the starting element (WK, SCI, DC1, DC2) and the separating clutch (K0) are operated in a slip state when the target drive torque (M_soll) of the motor vehicle reaches or exceeds the limit value (M_lim).

8. Method according to one of Claims 5 to 7, **characterized in that** a selection used by the method according to Claim 5, Claim 6 or Claim 7 is dependent on an absolute value of the present target drive torque (M_soll).

9. Method according to one of Claims 1 to 8, **characterized in that** the internal combustion engine (VM) is actively operated after cranking without this contributing to the driving of the motor vehicle, and is coupled to the drive train only when the target drive torque (M_soll) of the motor vehicle reaches or exceeds the limit value (M_lim).

10. Method according to Claim 9, **characterized in that** the internal combustion engine (VM) is operated in a speed-controlled manner after cranking at least until the internal combustion engine (VM) is coupled to the drive train by engaging the separating clutch (K0).

11. Method according to Claim 10, **characterized in that** a target speed of the internal combustion engine (VM) in speed-controlled operation is dependent on the present target drive torque (M_soll).

12. Electronic control unit (ECU) for open-loop and closed-loop control of a motor vehicle drive train, **characterized in that** the control unit (ECU) is configured to carry out the method according to one of Claims 1 to 11.

## Revendications

1. Procédé permettant de faire fonctionner une chaîne cinématique d'un véhicule automobile, dans lequel la chaîne cinématique présente au moins un moteur thermique (VM), une machine électrique (EM), une transmission (G) pour fournir différentes vitesses entre un arbre d'entraînement (GW1) et un arbre de sortie (GW2) de la transmission (G), un élément de démarrage (WK, SCI, DC1, DC2) dans le flux de force entre la machine électrique (EM) et l'arbre de sortie (GW2) ainsi qu'un embrayage de séparation (K0) dans le flux de force entre le moteur thermique (VM) et la machine électrique (EM), dans lequel un rotor (R) de la machine électrique (EM) est couplé à l'arbre d'entraînement (GW1),
- dans lequel, au début d'un processus de démarrage électrique, le véhicule automobile est entraîné uniquement par la machine électrique (EM), et l'élément de démarrage (WK, SCI, DC1, DC2) est alors fermé ou fonctionne dans un état de glissement, et dans lequel l'embrayage de séparation (K0) est ouvert,
- dans lequel pendant le processus de démarrage électrique, le moteur thermique (VM) est démarré par remorquage en fermant l'embrayage de séparation (K0) à l'aide de la machine électrique (EM), et ensuite, l'embrayage de séparation (K0) est à nouveau ouvert,
**caractérisé en ce qu'**après le démarrage par remorquage du moteur thermique (VM), le véhicule automobile est toujours entraîné uniquement par la machine électrique (EM), dans lequel une vitesse de rotation (n_EM) côté sortie de l'embrayage de séparation (K0) est inférieure à une vitesse de ralenti (n_VM_LL) du moteur thermique (VM), et **en ce que**, pour l'assistance à l'entraînement du véhicule automobile par le moteur thermique (VM), l'embrayage de séparation (K0) ne sera fermé que si un couple d'entraînement de consigne (M_soll) du véhicule automobile atteint ou dépasse une valeur limite (M_lim).

2. Procédé selon la revendication 1, **caractérisé en ce que** la vitesse de rotation côté sortie (n_EM) de l'embrayage de séparation (K0) après le démarrage par remorquage du moteur thermique (VM) reste inférieure à la vitesse de ralenti (n_VM_LL) du moteur thermique (VM) au moins jusqu'à ce que le couple d'entraînement de consigne (M_soll) du véhicule automobile atteigne ou dépasse la valeur limite (M_lim).

3. Procédé selon la revendication 1 ou la revendication 2, **caractérisé en ce que** l'élément de démarrage (WK, SCI, DC1, DC2) fonctionne dans un mode de glissement pendant le démarrage par remorquage du moteur thermique (VM), dans lequel le glissement au niveau de l'élément de démarrage (WK, SCI, DC1, DC2) est à nouveau réduit après l'ouverture de l'embrayage de séparation (K0).

4. Procédé selon la revendication 3, **caractérisé en ce que** le glissement au niveau de l'élément de démarrage (WK, SCI, DC1, DC2) est réduit à zéro après l'ouverture de l'embrayage de séparation (K0).

5. Procédé selon l'une quelconque des revendications 1 à 4, **caractérisé en ce que** le glissement au niveau de l'élément de démarrage (WK, SCI, DC1, DC2) est augmenté si le couple d'entraînement de consigne (M_soll) du véhicule automobile atteint ou dépasse la valeur limite (M_lim) pour minimiser une vitesse de rotation différentielle au niveau de l'embrayage de séparation (K0) à la fermeture de l'embrayage de séparation (K0).

6. Procédé selon l'une quelconque des revendications 1 à 4, **caractérisé en ce que** le glissement au niveau de l'élément de démarrage (WK, SCI, DC1, DC2) reste inchangé si le couple d'entraînement de consigne (M_soll) du véhicule automobile atteint ou dépasse la valeur limite (M_lim) de sorte que l'embrayage de séparation (K0) est fermé pendant un fonctionnement de glissement de l'embrayage de séparation (K0).

7. Procédé selon l'une quelconque des revendications 1 à 4, **caractérisé en ce qu'**à la fois l'élément de démarrage (WK, SCI, DC1, DC2) et l'embrayage de séparation (K0) fonctionnent dans un état de glissement si le couple d'entraînement de consigne (M_soll) du véhicule automobile atteint ou dépasse la valeur limite (M_lim).

8. Procédé selon les revendications 5 à 7, **caractérisé en ce qu'**un choix pour savoir lequel des procédés selon la revendication 5, 6 ou 7 sera utilisé dépend d'une contribution du couple d'entraînement de consigne (M_soll) présent.

9. Procédé selon l'une quelconque des revendications 1 à 8, **caractérisé en ce qu'**après le démarrage par remorquage, le moteur thermique (VM) fonctionne activement sans contribuer à l'entraînement du véhicule automobile, et ne sera couplé à la chaîne cinématique que si le couple d'entraînement de consigne (M_soll) du véhicule automobile atteint ou dépasse la valeur limite (M_lim).

10. Procédé selon la revendication 9, **caractérisé en ce qu'**après le démarrage par remorquage, le moteur thermique (VM) fonctionne de manière régulée en vitesse au moins jusqu'à ce que le moteur thermique (VM) soit couplé à la chaîne cinématique par la fermeture de l'embrayage de séparation (K0).

11. Procédé selon la revendication 10, **caractérisé en ce qu'**une vitesse de rotation de consigne du moteur thermique (VM) en fonctionnement régulé en vitesse dépend du couple d'entraînement de consigne (M_soll) présent.

12. Unité de commande électronique (ECU) permettant de commander et de réguler une chaîne cinématique de véhicule automobile, **caractérisée en ce que** l'unité de commande (ECU) est conçue pour effectuer le procédé selon l'une quelconque des revendications 1 à 11.
